Europäisches Patentamt

(19) European Patent Office   (11) Numéro de publication: **0 272 948**

Office européen des brevets   **B1**

(12)   **FASCICULE DE BREVET EUROPEEN**

(45) Date de publication du fascicule du brevet: **16.01.91**   (51) Int. Cl.⁵: **B 01 J 8/18,** B 01 J 8/12,
   A 23 B 7/04

(21) Numéro de dépôt: **87402527.3**

(22) Date de dépôt: **09.11.87**

(54) **Procédé et installation de traitement par fluidisation.**

(30) Priorité: **21.11.86 FR 8616220**

(43) Date de publication de la demande:
   **29.06.88 Bulletin 88/26**

(45) Mention de la délivrance du brevet:
   **16.01.91 Bulletin 91/03**

(84) Etats contractants désignés:
   **AT BE CH DE ES FR GB GR IT LI LU NL SE**

(56) Documents cités:
   **FR-A- 953 735**
   **GB-A- 884 346**

   **PATENT ABSTRACTS OF JAPAN, vol. 2, no. 59,**
   **27 avril 1978, page 410 C 78; & JP-A-53 16 366**
   **(MITSUBISHI JUKOGYO K.K.) 15-02-1978**

(73) Titulaire: **L'AIR LIQUIDE, SOCIETE ANONYME
   POUR L'ETUDE ET L'EXPLOITATION DES
   PROCEDES GEORGES CLAUDE
   75, Quai d'Orsay
   F-75321 Paris Cédex 07 (FR)**

(72) Inventeur: **Lermuzeaux, André
   21, rue du Vert Galant "Les Bruyères"
   F-94370 Sucy-en-Brie (FR)**

(74) Mandataire: **Vesin, Jacques et al
   L'AIR LIQUIDE, SOCIETE ANONYME POUR
   L'ETUDE ET L'EXPLOITATION DES PROCEDES
   GEORGES CLAUDE 75, quai d'Orsay
   F-75321 Paris Cédex 07 (FR)**

Courier Press, Leamington Spa, England.

**Description**

La présente invention concerne le traitement d'un produit à l'état subdivisé en éléments particulaires, ou grains, du genre où l'on met en oeuvre un lit fluidisé des dits éléments particulaires par un gaz de fluidisation dans une chambre ouverte vers le haut avec injection d'un gaz de fluidisation.

Généralement, la fluidisation est assurée par injection de gaz au travers d'une sole perforée ou grille agencée pour supporter le lit fluidisé ainsi formé. Dans bon nombre d'applications, cette façon de créer la fluidisation présente des inconvénients et en particulier il n'est pas rare que certains orifices de la sole se colmatent par coincement de grains ou formation d'agglomérats de grains, comme c'est le cas en surgélation où cette agglomération peut résulter par l'existence d'humidité résiduelle à la surface des grains. Il en résulte de graves perturbations de fonctionnement du lit fluidisé.

La demande de brevet JP—A—5 316 366 décrit un procédé de désulfuration de gaz mettant en oeuvre un lit fluidisé de particules actives dans une chambre tubulaire, l'injection de gaz étant assurée par des orifices face à face dans des parois en regard de la chambre de façon à former au moins deux courants convergeant d'un vers l'autre pour élaborer un courant de recomposition ascendant de fluidisation des particules qui sont recueillies à l'extrémité inférieure de la chambre.

L'invention a pour objet un procédé de traitement à lit fluidisé qui a un fonctionnement stable et une efficacité améliorée, ainsi qu'une installation qui reste compacte et de faibles coûts pour un débit traité important.

Selon l'invention, les orifices d'injection sont agencés à distance de l'extrémité inférieure de la chambre de façon à élaborer également un courant auxiliaire de recomposition s'écoulant au travers d'un lit sensiblement fixe des dits éléments particulaires formé dans la partie inférieure de la chambre et ledit courant auxiliaire s'échappant au voisinage de l'extrémité inférieure de la chambre.

De façon plus particulière, on assure une alimentation continue en éléments particulaires à traiter au niveau du lit fluidisé et un soutirage continu d'éléments particulaires traités au niveau bas du lit fixe. Selon une caractéristique de l'invention, pour maintenir un niveau substantiellement constant du lit fluidisé, on asservit le débit de soutirage du produit traité soit à la pression d'injection du gaz, soit au niveau de produit dans le lit fluidisé, soit d'une manière générale au débit d'entrée du produit.

A titre d'application préférentielle, l'invention concerne un procédé de refroidissement d'un produit, par exemple de surgélation de produits alimentaires en grains ou morceaux, caractérisé en ce que la chambre de traitement est placée dans une enceinte d'isolation thermique, et en ce qu'on recircule, dans l'enceinte, le gaz s'échappant en tête du lit fluidisé et au pied du lit fixe vers les orifices d'injection, en adjoignant au gaz de recirculation un agent cryogénique, par exemple sous forme d'azote liquide pulvérisé ou de neige carbonique.

De la sorte, grâce à la disposition latérale des ouies, on assure une fluidisation sans risque de bouchage des ouies.

L'invention concerne également un dispositif et une installation de traitement de produits à l'état subdivisé, selon les revendications 7 et 12.

D'autres caractéristiques et avantages de l'invention ressortiront d'ailleurs de la description qui suit, donnée à titre d'exemple, en référence aux dessins annexés, dans lesquels:

— la figure 1 est une vue schématique en coupe verticale et perspective cavalière d'une chambre de traitement selon l'invention;

— les figures 2 et 3 sont des vues respectivement en coupe verticale transversalement à la chambre de traitement et en coupe verticale partielle longitudinalement à la chambre de traitement.

— les figures 4, 5 et 6 sont des vues en coupe de trois variantes de réalisation de l'invention.

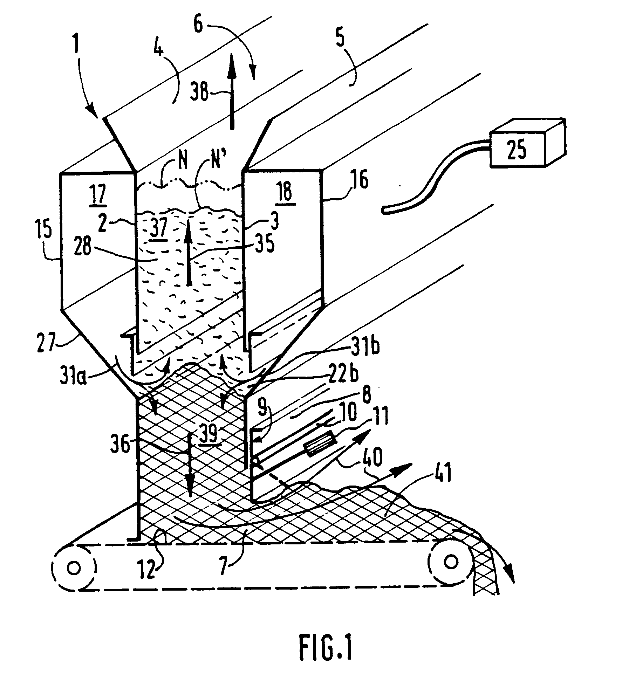

En se référant à la figure 1, une installation de traitement d'un produit à l'état subdivisé en éléments particulaires ou grains, comprend une chambre 1, de forme parallélépipédique, à parois verticales dont deux sont représentées en 2 et 3 forment des parois dites longitudinales, tandis que les parois d'extrémité non représentées forment des parois dites transversales. Les parois latérales se poursuivent, à leur extrémité supérieure, par des parois évasées vers l'extérieur 4 et 5 formant trémie d'alimentation 6 en produit à traiter.

A l'extrémité inférieure de la paroi latérale 3 est ménagée un passage longitudinal de soutirage 7 plus ou moins obturé par une porte de soutirage 8 montée à la fois à coulissement vertical réglable en 9 et à pivotement de sa partie basse vers l'extérieur autour d'un axe longitudinal 10 contre l'action d'un contrepoids 11.

En dessous de la chambre 1 est agencé un tapis d'extraction 12 pour le produit en grains traité.

La chambre 1 forme avec deux parois latérales opposées 2, 3, ou parois longitudinales, et des parois externes 15, 16 deux collecteurs d'alimentation en gaz sous pression 17, 18 et ces deux collecteurs 17, 18 communiquent par des fentes ou ouies longitudinales 22a et 22b, ménagées à peu près à mi-hauteur des parois 2, 3, avec la chambre 1, les ouies 22a et 22b étant au même niveau et se faisant face.

Les ouïes 22a et 22b sont réglables suivant leur dimension verticale, de sorte que pour un même débit gazeux, on puisse règler la vitesse d'introduction du gaz, au niveau des ouïes, dans la chambre 1.

Les parois 27, qui forment le fond des deux collecteurs 17 et 18, ont une pente de 45° à 30° par rapport au plan vertical, de sorte que des fines particules entrainées dans le courant gazeux de fluidisation ne puissent pas s'y accumuler, mais qu'au contraire elles soient réintroduites par les ouïes dans le lit fluidisé;

2

le circuit gazeux qui aboutit aux collecteurs 17 et 18 est de sens descendant vers les fentes 22a et 22b, et de section telle que la vitesse du gaz ne permette pas le dépôt de petites particules, et qu'on assuré ainsi leur réintroduction dans le lit fluidisé.

En fonctionnement avec mise sous pression gazeuse des collecteurs 17 et 18, deux courants 31a et 31b sont injectés l'un vers l'autre à travers les ouïes 22a et 22b; ils se recomposent pour former des courants verticaux, dont une partie ascendante 35 et une partie descendante 36.

Le courant ascendant 35 assure la fluidisation de la masse supérieure des grains 28 pour former un lit fluidisé 37 et s'échappe de la chambre 1 au travers de la trémie 6 en un courant 38, tandis que le courant descendant 36 s'écoule au travers des grains maintenus en contact mutuel en un lit fixe 39, le courant descendant s'échappant à l'extérieur en 40 au travers d'un talus de produit 41 formé sur le tapis extracteur 12.

Un débit de produit à traiter est déversé de préférence de façon continue dans la trémie 6 pour alimenter le lit fluidisé 37, tandis que c'est à partir du lit fixe 39 qu'est prélevé le débit de soutirage de produit traité. Pour assurer de bonnes conditions de fonctionnement, il convient de maintenir le niveau du lit fluidisé entre des limites supérieure N et inférieure N'; la pression d'injection du gaz mesurée dans les collecteurs 17 et 18 est fonction linéaire de la hauteur du lit fluidisé, de sorte que l'on maintient le niveau du produit entre ces limites en asservissant la vitesse du tapis extracteur 12 à la pression mesurée par un manomètre ou pressostat 25.

On comprend, à la lumière des explications qui précèdent, que le lit fluidisé 37 formé par du gaz introduit latéralement en pied de ce lit 37 prend appui sur un lit fixe 39. Du produit non encore traité est introduit dans le lit fluidisé 37, de préférence à son extrémité supérieure, ce débit introduit étant lui-même fluidisé dans le lit 37 qui alimente le lit fixe 39 au rythme du soutirage opéré par le tapis extracteur 12.

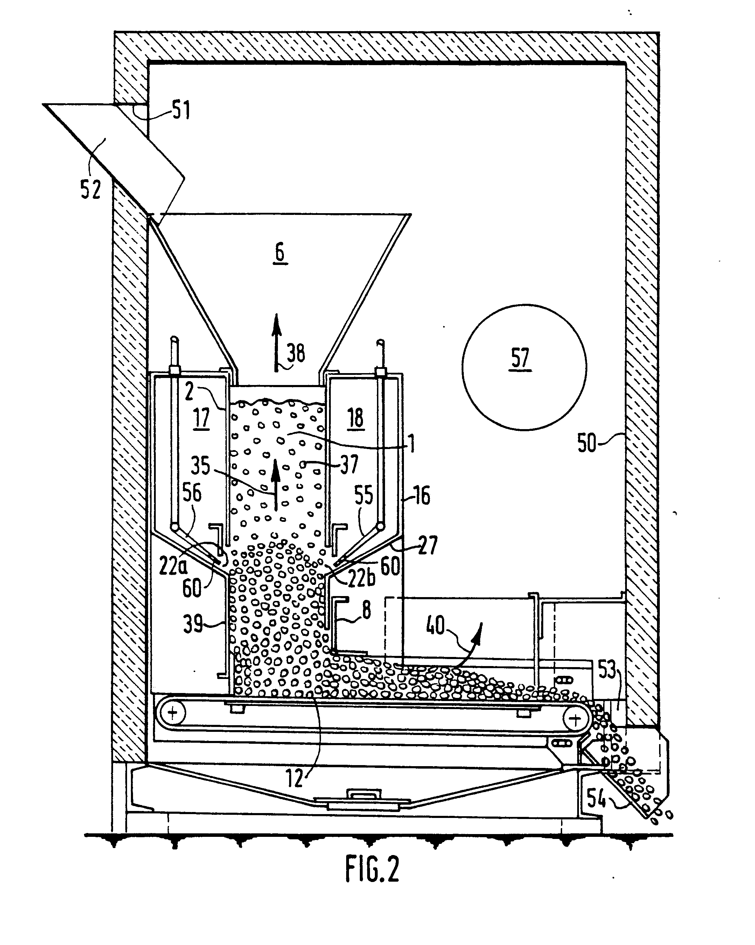

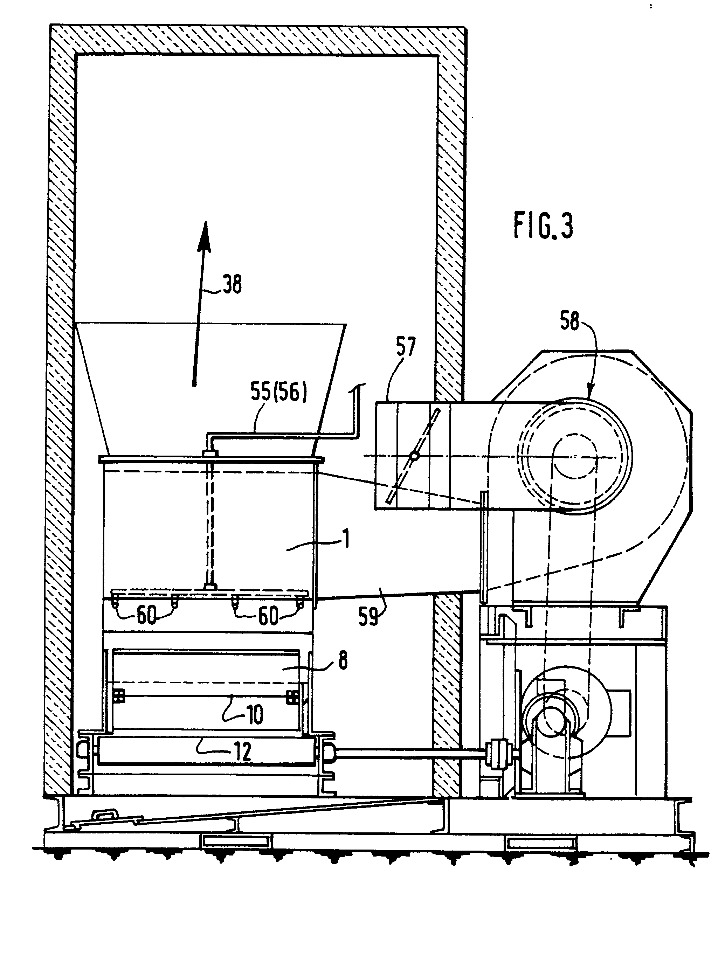

Aux figures 2 et 3, on a représenté une installation du type décrit à la figure 1 (les mêmes chiffres de référence sont utilisés pour désigner les mêmes parties constitutives), adaptée pour assurer la surgélation de petits pois. Ici la chambre 1 telle que décrite à la figure 1 est placée dans une enceinte d'isolation thermique 50 présentant une ouverture 51 pour le passage d'une goulotte alimentatrice 52 aboutissant dans la trémie 6, et une autre ouverture 53 équipée d'une goulotte déverseuse 54 au droit de l'extrémité de sortie du tapis extracteur 12. En outre, pour assurer l'apport de froid, sont prévus une double série de tubes pulvérisateurs 55, 56 aboutissant à des buses 60 le long de fentes 22a et 22b, les tubes étant réunis par un tube d'alimentation générale, non représenté, à un réservoir de fluide cryogénique, azote liquide ou gaz carbonique sous pression. Les courants gazeux froids 35 au travers de la trémie 12 et 40 issu du lit fixe 39 sont repris à l'aspiration 57 d'un ventilateur 58 pour être recyclés par une large tubulure 59 vers les collecteurs latéraux 17 et 18.

La dimension des ouies 22a, 22b est déterminée pour qu'à leur passage le gaz soit injecté avec une vitesse telle que sa répartition soit correcte sur une section horizontale de chambre. Les dimensions selon la verticale des ouïes sont réglables: en effet les ouïes injectent dans le produit des lames de gaz quasi horizontales, et le produit a tendance à avoir un mouvement de tourbillon dont l'allure dépend de la dimension des ouïes 22a et 22b, de la hauteur du lit au dessus des ouïes, de la vitesse du gaz dans les ouïes, et dans une moindre mesure de la taille du produit.

On donne ci-après des valeurs de ces paramètres, à titre indicatif pour que la couche de produit soit fluidisée au-dessus de ces tourbillons:
— hauteur du produit au dessus des ouïes: 400 mm
— *l* distance horizontale entre les ouïes ou largeur transversale du lit.
— *d* dimension verticale des ouïes
— v vitesse pratique de fluidisation rapportée à la section vide.
— V vitesse du gaz au travers d'une ouïe dans le cas d'azote à—60°C.

pour des produits: maïs en grains de 8 mm, pois de 6 à 7 mm, riz créole en grains individualisés de diamètre 3 mm et largeur 9 mm.

| Produit | v m/s | largeur l=250 mm | | largeur l=300 mm | |
|---|---|---|---|---|---|
| | | V m/s | *d* mm | *V* m/s | d mm |
| Maïs | 4 | 16,7 | 30 | 20 | 25 |
| Pois | 3,5 | 17,5 | 25 | 21 | 21 |
| Riz | 2,5 | 17,4 | 18 | 19 | 16,5 |

La vitesse V du gaz au travers de l'ouïe doit être augmentée lorsque la largeur transversale *l* du lit augmente, à la condition que la hauteur du lit et la largeur transversale l soient dans un rapport supérieur ou égal à 4/3.

Lorsque la hauteur de produit est plus faible, toutes choses égales par ailleurs, la vitesse V du gaz au travers des ouïes doit être augmentée pour obtenir une fluidisation régulière.

3

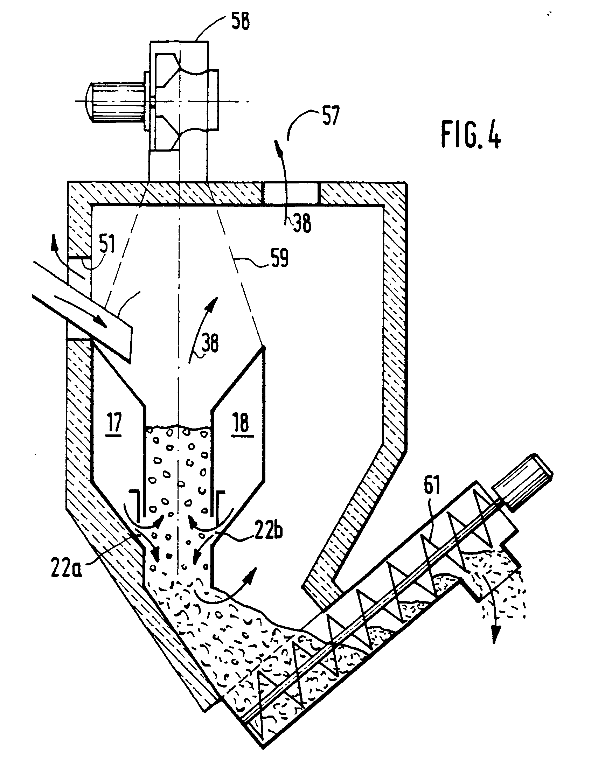

La figure 4 représente une autre disposition suivant l'invention, dans laquelle le soutirage du lit fixe est assuré par une vis de manutention 61 dont le mouvement est régulé pour maintenir le niveau du lit fluidisé dans des limites décrites plus haut.

Le ventilateur 58 est ici placé à la partie haute de l'appareil, et l'on comprend que les produits de petite taille ou fragments projetés par le lit fluidisé sont soit recueillis directement par le lit fixe, soit réintroduits dans le lit fluidisé s'ils sont aspirés par le ventilateur.

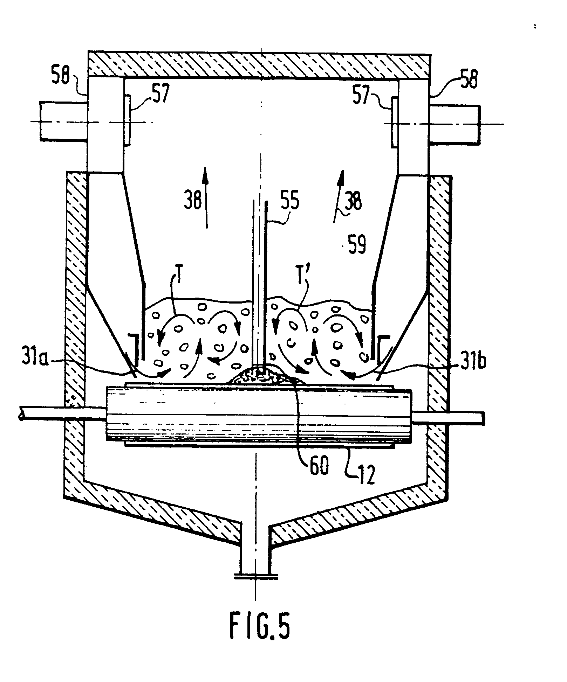

Lorsque le rapport de la hauteur du produit fluidisé au dessus des fentes 22a et 22b à la largeur l du lit est inferieur à 4/3, le gaz injecté par les ouïes produit des tourbillons symétriques T T', par rapport au plan de symétrie des parois longitudinales 2 et 3 et la figure 5 en montre l'intérêt: les tourbillons T, T' font remonter le produit du fond de la couche à la surface, tandis que se produisent des mouvements du produit de la surface vers le fond de la couche, au long des parois 2 et 3 et dans la zone médiane du lit. Il est avantageux, dans le cas de la surgélation de produits frais humides et collants, d'alimenter de lit dans la zone médiane, car le produit sera congelé en surface avant de parvenir aux parois 2 et 3 où il pourrait se coller.

On reconnait sur la figure 5 le tapis d'extraction 12, sur lequel le lit fixe de particules est réduit au minimum; ce lit fixe pourra être mécaniquement poussé par des socs fixes qui amèneront ses éléments dans la zone très agitée des tourbillons, ou, et de préférence déplacé par l'injection d'un fluide cryogénique, azote ou $CO_2$, au moyens de tubulures 55 munies de buses à jets horizontaux 60.

Deux ventilateurs de soufflage 58 sont placés au dessus des fentes 22a et 22b pour permettre la réintroduction des particules dans le lit.

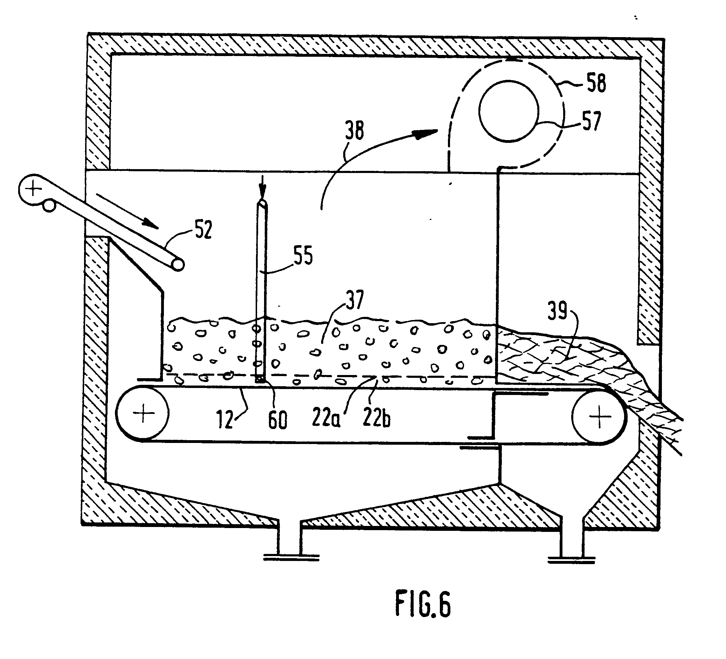

La figure 6 montre la coupe en long de l'appareil correspondant à la figure 5; la longueur ventillée du lit peut être plus importante que représentée afin de l'adopter à la production souhaitée; en bout de tapis une zone non ventilée correspond à un lit fixe, maintenant au niveau voulu le lit mobile ou fluidisé, le mouvement du tapis d'extraction étant regulé en fonction de la hauteur du produit en fluidisation.

## Revendications

1. Procédé de traitement d'un produit à l'état subdivisé en éléments particulaires, ou grains, du genre où l'on met en oeuvre un lit fluidisé des dits éléments particulaires par un gaz de fluidisation dans une chambre ouverte vers le haut avec injection d'un gaz de fluidisation, l'injection du gaz étant assurée par des orifices formés face à face dans des parois latérales de la chambre de façon à former au moins deux courants convergeant l'un vers l'autre pour élaborer un courant de recomposition ascendant de fluidisation des dits éléments particulaires recueillis à l'extrémité inférieure de la chambre, caractérisé en ce que les orifices d'injection (22a, 22b) sont agencés à distance de l'extrémité inférieure de la chambre (1) de façon à élaborer également un courant auxiliaire de recomposition (36) s'écoulant au travers d'un lit sensiblement fixe (39) des dits éléments particulaires formé dans la partie inférieure de la chambre et ledit couvant auxiliaire s'échappant au voisinage de l'extrémité inférieure de la chambre.

2. Procédé selon la revendication 1, caractérisé en ce que le courant auxiliaire (36) est de sens descendant.

3. Procédé selon la revendication 1, caractérisé en ce qu'on assure une alimentation continue en éléments particulaires à traiter au niveau du lit fluidisé et un soutirage continu d'éléments particulaires traités au niveau du lit fixe.

4. Procédé selon la revendication 1 ou 2, ou 3 caractérisé en ce qu'on asservi le débit de soutirage du produit traité à la pression d'injection du gaz de fluidisation.

5. Procédé selon une quelconque des revendications 1 à 4 caractérisé en ce qu'il est appliqué au refroidissement d'un produit, par exemple à la surgélation de produits alimentaires en grains ou morceaux, en ce que la chambre de traitement est placée dans une enceinte d'isolation thermique, et en ce qu'on recircule, dans l'enceinte, le gaz s'échappant en tête du lit fluidisé et au pied du lit fixe vers les orifices d'injection, en adjoignant au gaz de recirculation un agent cryogénique, par exemple sous forme d'azote liquide pulvérisé ou de neige carbonique.

6. Procédé selon la revendication 5, caractérisé en ce que le niveau (N) du lit fluidisé (31) est maintenu entre des valeurs déterminées par évacuation régulée du lit fixe (39) par un moyen d'extraction (12; 61).

7. Dispositif de traitement d'un produit à l'état subdivisé, du genre comprenant une chambre (1) à parois verticales ouverte à son extrémité supérieure, et présentant des orifices (22a, 22b) d'injection d'un gaz de fluidisation ménagées dans des parois en regard de la chambre et se faisant face, pour former un courant de recomposition ascendant (35) de fluidisation, et des moyens (12; 61) d'extraction du produit subdivisé à l'extrémité inférieure de la chambre (1), caractérisé en ce que la chambre presente en position basse un passage permettant l'échappement de gaz et en ce que les orifices d'injection de gaz sont des ouies latérales (22a, 22b) agencées et ménagées à distance déterminée de l'extrémité inférieure de la chambre pour former un courant auxiliaire (36) de recomposition s'écoulant au travers d'un lit sensiblement fixe (39) du produit subdivisé formé dans la partie inférieure de la chambre (1), vers l'extrémité inférieure de la chambre.

8. Dispositif selon la revendication 7, caractérisé par des moyens d'asservissement des moyens d'extraction (12; 61) à la pression du gaz de fluidisation injecté au travers des ouïes (22a, 22b).

9. Dispositif selon la revendication 7 ou la revendication 8, caractérisé en ce que le gaz de fluidisation

4

# EP 0 272 948 B1

est mis en mouvement par un ventilateur, placé avec son circuit au dessus du niveau des ouïes (22a, 22b), la section des ouïes étant réglable.

10. Dispositif selon l'une des revendications 7 à 9, caractérisé en ce que la chambre (1) est équipée, au-dessus des ouies, d'un moyen (52) d'alimentation de produit subdivisé à traiter.

11. Dispositif selon l'une des revendications 7 à 10, caractérisée en ce que la chambre (1) à une forme parallélépipèdique rectangle, les ouïes étant constituées de fentes longitudinales ménagées dans deux faces latérales opposées (2, 3) de la chambre (1).

12. Installation de réfrigération de produit subdivisé en éléments particulaires, caractérisée en ce qu'elle comporte un dispositif de traitement selon l'une des revendications 7 à 11, la chambre (1) étant enveloppée dans une enceinte d'isolation thermique, et étant équipée d'un circulateur gazeux (57, 58) débouchant dans un collecteur (17, 18) d'alimentation des ouïes latérales, et de moyens (55, 56) d'injection d'un fluide cryogénique.

13. Installation selon la revendication 12, caractérisée en ce que les moyens (55, 56) d'injection de fluide cryogénique aboutissent au niveau des ouïes (22a, 22b).

## Patentansprüche

1. Verfahren zur Behandlung eines Produkts, das in Einzelelemente oder Körner fein zerteilt ist, wobei ein Fließbett der genannten Einzelelemente durch ein Fluidisierungsgas in einer nach oben offenen Kammer unter Einblasen eines Fluidisierungsgases erzeugt wird und das Einblasen des Gases durch Öffnungen erfolgt, die in Seitenwänden der Kammer einander gegenüberliegen, so daß mindestens zwei gegeneinander gerichtete Ströme zusammenlaufen und einen vereinigten, aufsteigenden Strom zur Fluidisierung der genannten Einzelelemente bilden, die am unteren Ende der Kammer gesammelt werden, dadurch gekennzeichnet, daß die Einblasöffnungen (22a, 22b) mit Abstand von dem unteren Ende der Kammer (1) in der Weise angeordnet werden, daß außerdem ein zusätzlicher vereinigter Strom (36) entsteht, der durch ein im wesentlichen festes, im unteren Teil der Kammer gebildetes Bett (39) der genannten Einzelelemente fließt und in der Nähe des unteren Endes der Kammer austritt.

2. Verfahren nach Anspruch 1, dadurch gekennzeichnet, daß der zusätzliche Strom (36) abwärts fließt.

3. Verfahren nach Anspruch 1, dadurch gekennzeichnet, daß eine fortlaufende Versorgung mit zu behandelnden Einzelelementen im Bereich des Fließbetts und ein fortlaufender Austrag von behandelten Einzelelementen im Bereich des Festbetts gewährleistet wird.

4. Verfahren nach einem der Ansprüche 1 bis 3, dadurch gekennzeichnet, daß die Menge des Austrags von behandeltem Produkt gemäß dem Einblasdruck des Fluidisierungsgases gesteuert wird.

5. Verfahren nach einem der Ansprüche 1 bis 4, dadurch gekennzeichnet, daß es zum Kühlen eines Produkts eingesetzt wird, z.B. zur Tiefkühlung von körnigen oder stückigen Nahrungsmitteln, daß die Behandlungskammer in einem wärmeisolierenden Raum angeordnet ist, und daß in dem Raum das am oberen Ende des Fließbetts und am unteren Ende des Festbetts austretende Gas an die Einblasöffnungen zurückgeführt wird, wobei dem Umwälzgas ein Tiefsttemperaturmittel z.B. in Form von zerstäubtem flüssigem Stickstoff oder Kohlensäureschnee, zugesetzt wird.

6. Verfahren nach Anspruch 5, dadurch gekennzeichnet, daß die Höhe (N) des Fließbetts (31) zwischen Werten gehalten wird, die durch regulierten Austrag des Festbetts (39) durch ein Fördermittel (12; 61) bestimmt werden.

7. Vorrichtung zur Behandlung eines in Einzelelemente fein zerteilten Produkts, mit einer um ihrem oberen Ende offenen Kammer (1) mit vertikalen Wänden und mit einander gegenüberliegenden, zum Einblasen eines Fluidisierungsgases bestimmten Öffnungen (22a, 22b) in einander gegenüberstehenden Wänden der Kammer, für die Bildung eines aufsteigenden, vereinigten Fluidisierungsstroms (35), und mit einer Einrichtung (12; 61) für den Austrag des fein zerteilten Produkts am unteren Ende der Kammer (1), dadurch gekennzeichnet, daß die Kammer unten einen Durchlaß für den Austritt von Gas aufweist, und daß die Gaseinblasöffnungen als seitliche Lufteinlässe (22a, 22b) ausgebildet sind, die in bestimmtem Abstand von dem unteren Ende der Kammer vorgesehen und angeordnet sind, um einen zusätzlichen vereinigten Strom (36) zu bilden, der durch ein im unteren Teil der Kammer (1) gebildetes, im wesentlichen festes Bett (39) des fein zerteilten Produkts in Richtung auf das untere Ende der Kammer fließt.

8. Vorrichtung nach Anspruch 7, gekennzeichnet durch Mittel zum Steuern der Austrageinrichtung (12; 61) gemäß dem Druck des durch die Lufteinlässe (22a, 22b) eingeblasenen Fluidisierungsgases.

9. Vorrichtung nach Anspruch 7 oder 8, dadurch gekennzeichnet, daß das Fluidisierungsgas durch ein Gebläse in Bewegung gesetzt wird, das mit seiner Schaltung oberhalb der Lufteinlässe (22a, 22b) angeordnet ist, und daß der Querschnitt der Lufteinlässe regulierbar ist.

10. Vorrichtung nach einem der Ansprüche 7 bis 9, dadurch gekennzeichnet, daß die Kammer (1) oberhalb der Lufteinlässe mit einer Einrichtung (52) für die Zuführung von zu behandelndem, fein zerteiltem Produkt versehen ist.

11. Vorrichtung nach einem der Ansprüche 7 bis 10, dadurch gekennzeichnet, daß die Kammer (1) die Form eines rechteckigen Quaders hat, und daß die Lufteinlässe als Längsschlitze ausgebildet sind, die in zwei einander gegenüberstehende Seitenwände (2, 3) der Kammer (1) geschnitten sind.

12. Anlage zum Kühlen von in Einzelelemente fein zerteiltem Produkt, dadurch gekennzeichnet, daß sie

5

eine Behandlungsvorrichtung nach einem der Ansprüche 7 bis 11 aufweist, wobei die Kammer (1) von einem wärmeisolierenden Raum umgeben und mit einer Gasumwälzeinrichtung (57, 58) ausgestàttet ist, die in eine Sammelleitung (17, 18) zur Speisung der seitlichen Lufteinlässe mündet, sowie mit Mitteln (55, 56) zum Einspritzen eines Tiefstkühlfluids.

13. Anlage nach Anspruch 12, dadurch gekennzeichnet, daß die Mittel (55, 56) zum Einspritzen von Tiefstkühlfluid in der Höhe der Lufteinlässe (22a, 22b) ausmünden.

**Claims**

1. Process for treating a product subdivided into particles or grains, of the type employing a bed of the said particles fluidized by a gas in a chamber open at the top with injection of a fluidizing gas, the gas injection being assured by orifices formed facing each other in side walls of the chamber so as to form at least two converging currents to set up a recombined ascending current fluidizing the said particles collecting at the lower end of the chamber, characterized in that the injection orifices (22a, 22b) are arranged at a distance from the lower end of the chamber (1) in such a way as also to set up a recombined secondary current (36) passing through a substantially fixed bed (39) of the said particles formed in the lower part of the chamber, the said secondary current escaping in the vicinity of the lower end of the chamber.

2. Process according to Claim 1, characterized in that the secondary current (36) is in a descending direction.

3. Process according to Claim 1, characterized in that particles to be treated are continuously fed at the level of the fluidized bed and treated particles are continuously drawing off at the level of the fixed bed.

4. Process according to Claim 1 or 2, or 3, characterized in that the rate of extraction of the treated product is governed by the injection pressure of the fluidizing gas.

5. Process according to any one of Claims 1 to 4, characterized in that it is applied to the cooling of a product, for example to the deep or quick freezing of food products in grains or pieces, in that the chamber possesses, at a low position, a passage allowing the gas to escape, and in that the treatment chamber is placed in a heat insulated enclosure, and the gas escaping at the top of the fluidized bed and at the bottom of the fixed bed is recirculated, within the enclosure, to the injection orifices, with the admixture of a cryogenic agent, for example in the form of atomized liquid nitrogen, or carbonic acid snow.

6. Process according to Claim 5, characterized in that the level (N) of the fluidized bed (31) is held between predetermined values by controlled extraction of the fixed bed (39) by an extractor means (12; 61).

7. Device for treating a divided product, of the type comprising a chamber (1) with vertical walls, open at its upper end, and having orifices (22a, 22b) for injection of fluidizing gas provided in walls facing into the chamber and facing each other, to form a recombined ascending current (35) with fluidizing effect, and means (12; 61) for extracting the subdivided product at the lower end of the chamber (1), characterized in that the chamber has at a low position a passage permitting the escape of gas and in that the gas injection orifices are lateral inlets (22a, 22b) arranged and provided at a predetermined distance from the lower end of the chamber to form a recombined secondary current (36) passing through a substantially fixed bed (39) of the subdivided product formed in the lower part of the chamber (1), towards the lower end of the chamber.

8. Device according to Claim 7, characterized by means whereby the extractor means (12; 61) are governed by the pressure of the fluidizing gas injected through the inlets (22a, 22b).

9. Device according to Claim 7 or Claim 8, characterized in that the fluidizing gas is propelled by a blower located with its circuit above the level of the inlets (22a, 22b), the area of cross-section of the inlets being adjustable.

10. Device according to one of Claims 7 to 9, characterized in that the chamber (1) is equipped above the inlets, with means (52) for feeding the subdivided product to be treated.

11. Device according to one of Claims 7 to 10, characterized in that the chamber (1) has a rectangular shape, the inlets being constituted by longitudinal slots in two opposite side faces (2, 3) of the chamber (1).

12. Refrigeration installation for product subdivided into particles, characterized in that it comprises a treatment device according to one of Claims 7 to 11, the chamber (1) being enclosed in a heat insulated enclosure, and being equipped with a gas blower (57, 58) discharging into a main duct (17, 18) feeding the lateral inlets, and means (55, 56) for injecting a cryogenic fluid.

13. Installation according to Claim 12, characterized in that the means (55, 56) for injecting cryogenic fluid terminate at the level of the inlets (22a, 22b).

FIG.1

FIG.2

FIG.3

FIG. 4

FIG.5

FIG.6